# EUROPÄISCHE PATENTSCHRIFT

(11) **EP 3 602 275 B1**
(45) Veröffentlichungstag und Bekanntmachung des Hinweises auf die Patenterteilung: **17.07.2024**
(21) Anmeldenummer: 18709545.0
(22) Anmeldetag: 06.03.2018
(51) Int. Cl.: G06F 8/654, G06F 8/656

(54) **VERFAHREN UND VORRICHTUNG ZUM AKTUALISIEREN EINES PROGRAMMES**
METHOD AND DEVICE FOR UPDATING A PROGRAM
PROCÉDÉ ET DISPOSITIF SERVANT À METTRE À JOUR UN PROGRAMME

(30) Priorität: 29.03.2017 DE 102017205274
(43) Veröffentlichungstag der Anmeldung: 05.02.2020
(73) Patentinhaber: Robert Bosch GmbH, 70442 Stuttgart (DE)
(72) Erfinder: SCHMITT, Hans-Walter, 71287 Weissach/Flacht (DE); AUE, Axel, 70825 Korntal-Muenchingen (DE); SCHREIBER, Matthias, 71665 Vaihingen/Enz (DE)
(86) Internationale Anmeldenummer: PCT/EP2018/055466
(87) Internationale Veröffentlichungsnummer: WO 2018/177698

(56) Entgegenhaltungen:
- US-A1- 2013 322 169
- US-B1- 7 886 287

## Beschreibung

Die vorliegende Erfindung betrifft ein Verfahren zum Aktualisieren eines Programmes. Die vorliegende Erfindung betrifft darüber hinaus eine entsprechende Vorrichtung, ein entsprechendes Computerprogramm sowie ein entsprechendes Speichermedium.

### Stand der Technik

Ein nichtflüchtiger elektronischer Speicherbaustein, dessen Inhalt elektrisch gelöscht werden kann, ist dem Fachmann als elektrisch löschbarer programmierbarer Nur-Lese-Speicher (*electrically erasable programmable readonly memory,* EEPROM) bekannt. Im Rahmen der folgenden Ausführungen wird der Begriff "EEPROM" dabei in einem weiten Wortsinn verwendet und umfasst neben herkömmlichen EEPROMs gleichermaßen die neueren - blockweise löschbaren - sogenannten Flashspeicher. Zur Ermöglichung einer nichtflüchtigen Speicherung bei geringem Energieverbrauch werden in der Fahrzeugelektronik nach dem Stand der Technik vorrangig diese Flash-EEPROM-Speicher eingesetzt, bei denen die in einzelnen Speicherzellen hinterlegte Information in Form elektrischer Ladungen auf einem Floating-Gate oder in einem Charge-Trapping-Speicherelement eines Metall-Isolator-Halbleiter-Feldeffekttransistors (*metal insulator semiconductor field-effect transistor,* MISFET) gespeichert wird. Grundsätzlich sind die Speicherzellen hierbei als Matrix in einem sogenannten Zellenfeld (*cell array*) angeordnet, wobei über eine Koordinate die Adressleitungen zur Auswahl einer Spalte oder Zeile von Speicherzellen dienen und in der anderen Koordinate Datenleitungen zu den Speicherzellen führen.

Zur Erhöhung der Speicherdichte werden hierbei mitunter mehrstufige Zellen (*multi-level cells,* MLCs) eingesetzt, in denen mehr als ein Bit pro Zelle gespeichert wird. Um dies zu ermöglichen, wird die in einer Speicherzelle hinterlegte Ladungsmenge feiner dosiert und beim Auslesen auch genauer ausgewertet, um mehr als zwei mögliche Zustände zu unterscheiden und mehr als ein Bit abspeichern zu können. Dies birgt gegenüber einer einstufigen Zelle (*single-level cell,* SLC) den Nachteil einer verringerten Lese- und Schreibgeschwindigkeit. Eine MLC reagiert zudem wesentlich empfindlicher auf etwaige Ladungsverluste.

In DE102014223035A1 wird ein Verfahren zum Übertragen von Daten innerhalb eines Computer-Systems zwischen einer Speicherschnittstelle eines flüchtigen Speichers, einer Speicherschnittstelle insbesondere eines MLC-NAND-Speichers und einer Schnittstelle eines Mikrocontrollers vorgestellt, welches das Einlesen von Daten von der Speicherschnittstelle des MLC-NAND-Speichers zu Beginn eines Boot-Vorgangs des Mikrocontrollers und Bereitstellen der eingelesenen Daten an die Speicherschnittstelle des flüchtigen Speichers umfasst.

In US2013/322169A1 wird ein Verfahren und eine Vorrichtung zum Verwalten von Daten in einem Speicher, beispielsweise einem Flash-Speicher, offenbart. Gemäß den Ausführungsformen wird ein erster Datenblock im Single-Level-Cell-Modus (SLC) in eine Gruppe von Speicherzellen an einem ersten Speicherort geschrieben. Der erste Datenblock wird vom ersten Speicherort in eine Gruppe von Speicherzellen an einem zweiten Speicherort kopiert, um während eines geschützten Betriebsmodus eine Sicherungskopie des ersten Datenblocks bereitzustellen. Anschließend wird ein zweiter Datenblock in der Gruppe von Speicherzellen am ersten Speicherort überschrieben, sodass der erste Speicherort sowohl den ersten als auch den zweiten Datenblock im Multi-Level-Cell-Modus (MLC) speichert.

In US7886287B1 wird ein Verfahren und eine Vorrichtung zum Aktualisieren laufender Prozesse offenbart. Insbesondere wird eine Sprunganweisung in die erste Anweisungszeile einer aktualisierten Funktion eingefügt. Der Sprungbefehl leitet das Programm an eine Stelle innerhalb einer Sprungtabelle um, die die Adresse des ersten Befehls einer aktualisierten Funktion enthält. Das Einfügen des Sprungbefehls kann erfolgen, ohne die Ausführung der Anwendung anzuhalten, wodurch die Installation eines Patches ohne Unterbrechung der Anwendungsdienste ermöglicht wird.

### Offenbarung der Erfindung

Die Erfindung stellt ein Verfahren zum Aktualisieren eines Programmes, eine entsprechende Vorrichtung, ein entsprechendes Computerprogramm sowie ein entsprechendes Speichermedium gemäß den unabhängigen Ansprüchen bereit. Dem erfindungsgemäßen Ansatz liegt hierbei die Erkenntnis zugrunde, dass - bedingt durch die hohen Kosten einer werkstattgebundenen Aktualisierung der Software (SW) fahrzeugelektronischer Systeme - in modernen Systemen die Instruktionen und Daten umfassenden Programm- oder Systemabbilder (*images*) zunehmend über die Luftschnittstelle (*over the air,* OTA) geändert werden. Zur Durchführung eines derartigen Updates bieten sich verschiedene Möglichkeiten; diese haben jeweils unterschiedliche Vor- und Nachteile.

Eine herkömmliche Methode beruht darauf, zwei Systemabbilder vorzuhalten: Aus einem Systemabbild wird im Falle einer Motorsteuerung etwa der Motorbetrieb aufrechterhalten, während ein neues Systemabbild auf das betreffende Steuergerät (*electronic control unit,* ECU) aufgespielt wird. Beim nächsten Start des Motors kann das Steuergerät auf Grundlage des neuen Systemabbildes betrieben werden.

Um diese herkömmliche Methode zu unterstützen, wird doppelt so viel Speicherplatz wie bei einem nicht OTA-fähigen Steuergerät benötigt, da beide Systemabbilder zeitgleich im nichtflüchtigen Speicher (*non-volatile memory,* NVM) untergebracht werden müssen. Dies birgt den Nachteil hoher Stückkosten bei der Herstellung entsprechender Steuergeräte - unabhängig davon, ob ihre OTA-Fähigkeit vom Fahrzeughersteller oder Erstausrüster (*original equipment manufacturer,* OEM) letztlich eingesetzt wird.

Es wird daher vorgeschlagen, Speicherzellen für den Zeitraum der Speicherung von zwei Systemabbildern zwecks Aktualisierung als MLC, also zumindest zweistufig zu nutzen. Ein Vorzug dieses Verfahrens liegt in seinem gegenüber herkömmlichen Methoden verringerten Speicherzellenbedarf. Vielmehr wird durch die Nutzung der MLC-Technik nur ein Bruchteil zusätzlicher Speicherkapazität benötigt.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, das Verfahren im Rahmen von OTA-Updates bei einem Fahrzeugsteuergerät auf Basis eines Mikrocontrollers (µC) anzuwenden. Auf diese Weise kann in der Anwendung entschieden werden, ob in herkömmlicher Weise - mit entsprechendem Kostennachteil - ein µC mit mehr Flash-Speicher verwendet wird oder vorübergehend eine verringerte Systemleistung (*performance*) in Kauf genommen wird, um die beiden Systemabbilder für OTA im NVM vorzuhalten.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 einen ersten Schritt des Verfahrens.
Figur 3 einen zweiten Schritt des Verfahrens.
Figur 4 einen dritten Schritt des Verfahrens.
Figur 5 einen vierten Schritt des Verfahrens.
Figur 6 ein Ergebnis des Verfahrens.
Figur 7 schematisch ein Steuergerät gemäß einer zweiten Ausführungsform.

### Ausführungsformen der Erfindung

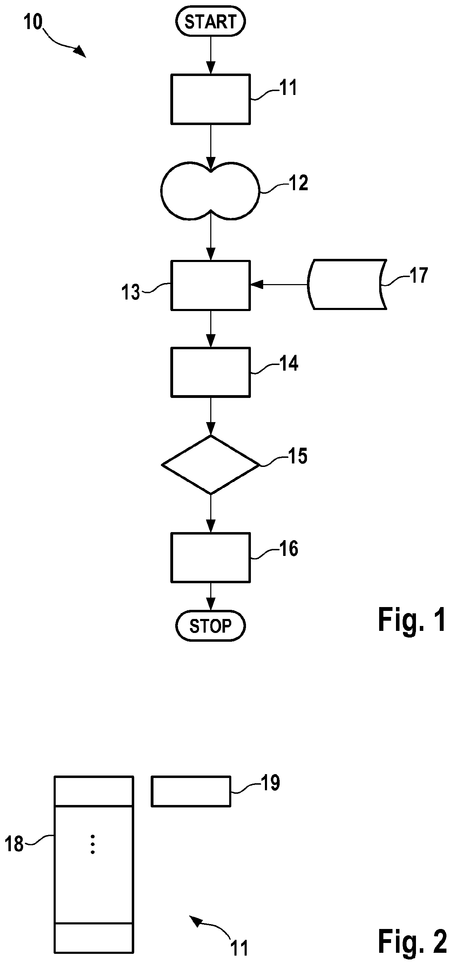

Figur 1 illustriert grundlegende funktionale Aspekte des vorgeschlagenen Verfahrens (10), die nunmehr in Zusammenschau mit jeweils einer der Figuren 2 bis 6 erläutert seien. In letzteren Figuren sind im SLC-Modus betriebene Zellen hierbei mit einer durchgezogenen, im MLC-Modus betriebene Zellen hingegen mit einer gestrichelten Linie dargestellt.

Figur 2 zeigt dabei zunächst einen normalen Betriebszustand (11), bei welchem ein erstes Abbild des Programmes in einem zusammenhängenden Adressraum (18) ausgeführt wird, während die Zellen sämtlicher Speicherblöcke als SLCs, also einstufig betrieben werden. Ein einzelner Block mag hierbei jeweils 1 Mbyte umfassen, wobei für die anstehende Aktualisierung ein nicht zwingend vom Adressraum (18) des Programmes umfasster, zunächst noch ungenutzter Sicherungsblock (19) gleicher Größe bereitsteht.

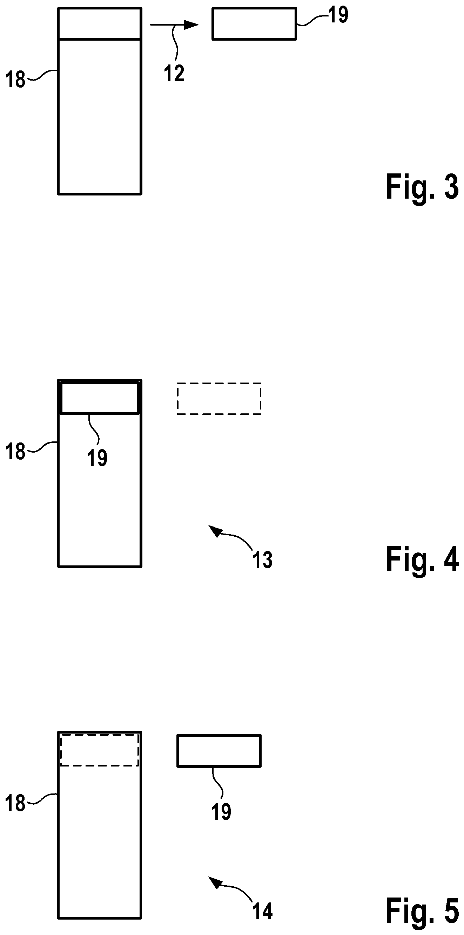

Figur 3 verdeutlicht die Konfiguration nach der Anforderung eines neuen Abbildes. Hier wurde der Inhalt eines Blockes in den Sicherungsblock (19) kopiert (12). Der ursprünglich dem Originalblock zugeordnete Adressbereich wird nun hardwaremäßig auf den Sicherungsblock (19) abgebildet, welcher somit aus Sicht des laufenden Programmes gleichsam in den Adressraum (18) des Programmes "eingeblendet" wird.

Nun können, wie in Figur 4 dargestellt, der ursprüngliche Block in den MLC-Modus umgeschaltet und zusätzlich zum ersten ein Teil eines zweiten Abbildes (17) programmiert werden (13), welcher der Blockgröße entspricht. Da der zu programmierende Block im Adressraum (18) des Programmes noch immer quasi gegen den Sicherungsblock (19) "ausgetauscht" ist, wird die Funktionsfähigkeit des ersten Abbildes durch diesen Programmiervorgang nicht beeinträchtigt.

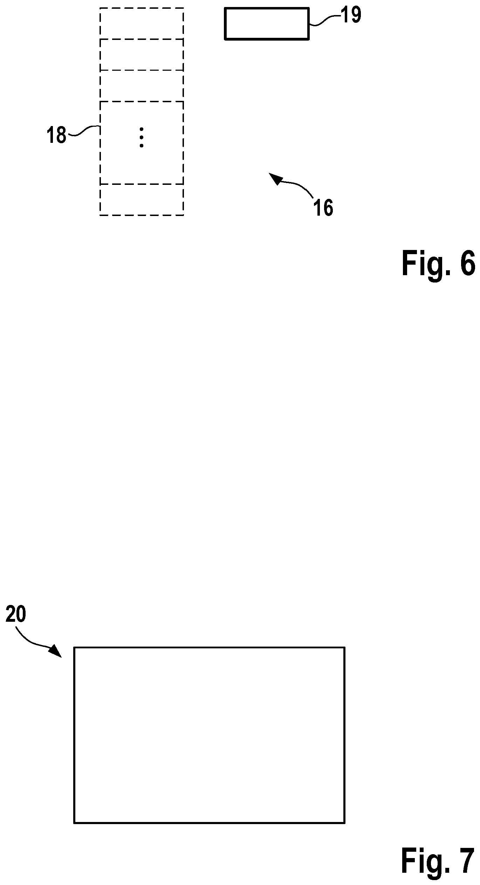

Sodann kann der MLC-Block wieder im obigen Sinne an der ursprünglichen Adresse eingeblendet werden (14), während er im mehrstufigen Modus verbleibt, sodass das erste Abbild wie in Figur 5 weiterhin ausgeführt werden kann. Auf entsprechende Weise wird mit weiteren Blöcken verfahren, bis alle Blöcke sich im MLC-Modus befinden und somit beide Abbilder vollständig im NVM vorliegen (Entscheidung 15 - Figur 1), was dem Zustand (16) gemäß Figur 6 entspricht.

In diesem Endzustand (16) kann wahlweise das erste oder zweite Abbild des Programmes ausgeführt werden. Nachdem die Funktionsfähigkeit des zweiten Abbildes (17) - zum Beispiel im Verbund mit unterschiedlichen Steuergeräten eines solchermaßen aktualisierten Fahrzeuges - sichergestellt ist, können die Blöcke nach dem umgekehrten Verfahren der Reihe nach wieder auf den einstufigen Modus zurückgeschaltet werden, um die Zuverlässigkeit des Programmes im Dauerbetrieb zu maximieren.

Dieses Verfahren (10) kann beispielsweise in Software oder Hardware oder in einer Mischform aus Software und Hardware in einem Steuergerät (20) implementiert sein, wie die schematische Darstellung der Figur 7 verdeutlicht.

## Patentansprüche

1. Verfahren (10) zum Aktualisieren eines Programmes für ein Steuergerät in einem Kraftfahrzeug in einem mehrere Blöcke umfassenden Flash-EEPROM-Speicher mit mehrstufigen Zellen, beinhaltend die folgenden Merkmale:
- ein erstes Abbild des Programmes wird ausgeführt (11), während ein Adressraum (18) des Programmes auf die Blöcke abgebildet und die Blöcke in einem einstufigen Modus betrieben werden,
- auf Anforderung eines zweiten Abbildes wird ein Teil des ersten Abbildes von einem Adressbereich innerhalb des Adressraumes (18), welcher auf einen bestimmten Block unter den Blöcken abgebildet wird, in einen Sicherungsblock (19) des Speichers kopiert (12),
- der Block wird in einen mehrstufigen Modus versetzt und zusätzlich zu dem Teil des ersten Abbildes mit einem der Blockgröße entsprechenden Teil des zweiten Abbildes (17) des Programmes programmiert (13), während der Adressbereich vorübergehend auf den Sicherungsblock (19) abgebildet wird, sodass die Funktionsfähigkeit des ersten Abbildes nicht beeinträchtigt wird,
- der Adressbereich wird wieder auf den Block umgeschaltet (14), während der Block im mehrstufigen Modus verbleibt,
- solange das zweite Abbild (17) unvollständig ist (15, N), werden das Kopieren (12), Programmieren (13) und Umschalten (14) mit weiteren Teilen der Abbilder wiederholt und
- sobald das zweite Abbild (17) vollständig ist (15, Y), kann es anstelle des ersten Abbildes ausgeführt (16) werden.

2. Verfahren (10) nach Anspruch 1,
**gekennzeichnet durch** folgende Merkmale:
- eine Funktionsfähigkeit des zweiten Abbildes (17) wird während des Ausführens (16) geprüft und
- die Blöcke werden nach dem umgekehrten Verfahren (10) der Reihe nach in den einstufigen Modus zurückversetzt, wenn die Funktionsfähigkeit gesichert ist.

3. Verfahren (10) nach Anspruch 1,
**gekennzeichnet durch** folgendes Merkmal:
- der Speicher wird mit mehr Zugriffszeit betrieben, um die Auswertung der Informationen der Multilevel Zellen zu ermöglichen.

4. Verfahren (10) nach Anspruch 1,
**gekennzeichnet durch** folgende Merkmale:
- das Steuergerät kann in einem normalen SLC Modus betrieben werden, wobei die Zugriffszeit kürzer und damit die Performance höher ist und
- das Steuergerät kann in einem MLC Modus betrieben werden, wobei die Zugriffszeit länger und damit die Performance geringer ist.

5. Verfahren (10) nach einem der Ansprüche 1 bis 4,
**gekennzeichnet durch** folgendes Merkmal:
- das Programm ist dazu angepasst, ein Feldgerät in dem Kraftfahrzeug, insbesondere einen Verbrennungsmotor, zu steuern.

6. Verfahren (10) nach Anspruch 5,
**gekennzeichnet durch** folgendes Merkmal:
- das zweite Abbild (17) wird vor dem Programmieren über eine Luftschnittstelle in das Kraftfahrzeug übertragen.

7. Verfahren (10) nach einem der Ansprüche 1 bis 6,
**gekennzeichnet durch** folgendes Merkmal:
- der Speicher ist nichtflüchtig.

8. Verfahren (10) nach Anspruch 7,
**gekennzeichnet durch** folgendes Merkmal:
- der Speicher ist ein NAND- oder NOR-Flash.

9. Computerprogramm, welches eingerichtet ist, das Verfahren (10) nach einem der Ansprüche 1 bis 8 auszuführen.

10. Maschinenlesbares Speichermedium, auf dem das Computerprogramm nach Anspruch 9 gespeichert ist.

11. Vorrichtung (20), die eingerichtet ist, das Verfahren (10) nach einem der Ansprüche 1 bis 8 auszuführen.

12. Vorrichtung (20) nach Anspruch 11 in Form eines Mikrocontrollers.

## Claims

1. Method (10) for updating a program for a control unit in a motor vehicle in a multi-block flash EEPROM memory having multi-level cells, comprising the following features:
- a first image of the program is executed (11), while an address space (18) of the program is mapped to the blocks and the blocks are operated in a single-level mode,
- upon request of a second image, a portion of the first image is copied (12) from an address range within the address space (18) that is mapped to a specific block out of the blocks to a backup block (19) of the memory,
- the block is put into a multi-level mode and, in addition to the portion of the first image, programmed (13) with a portion of the second image (17) of the program corresponding to the block size, while the address range is temporarily mapped to the backup block (19) so that the functionality of the first image is not impaired,
- the address range is switched back to the block (14), while the block remains in multi-level mode,
- as long as the second image (17) is incomplete (15, N), the copying (12), programming (13) and switching (14) are repeated with further portions of the images and
- as soon as the second image (17) is complete (15, Y), it is able to be executed instead of the first image (16) .

2. Method (10) according to Claim 1,
**characterized by** the following features:
- a functionality of the second image (17) is checked during the execution (16) and
- the blocks are reset in sequence to single-level mode through the reverse method (10) if the functionality is assured.

3. Method (10) according to Claim 1,
**characterized by** the following feature:
- the memory is operated with more access time in order to enable the evaluation of the information of the multi-level cells.

4. Method (10) according to Claim 1,
**characterized by** the following features:
- the control unit is able to be operated in a normal SLC mode, wherein the access time is shorter and the performance is thus higher and
- the control unit is able to be operated in an MLC mode, wherein the access time is longer and the performance is thus lower.

5. Method (10) according to one of Claims 1 to 4,
**characterized by** the following feature:
- the program is adapted to control a field device in the motor vehicle, in particular a combustion engine.

6. Method (10) according to Claim 5,
**characterized by** the following feature:
- the second image (17) is transmitted to the vehicle via an over-the-air interface prior to programming.

7. Method (10) according to one of Claims 1 to 6,
**characterized by** the following feature:
- the memory is non-volatile.

8. Method (10) according to Claim 7,
**characterized by** the following feature:
- the memory is a NAND or NOR flash.

9. Computer program that is configured to carry out the method (10) according to one of Claims 1 to 8.

10. Machine-readable storage medium on which the computer program according to Claim 9 is stored.

11. Device (20) configured to carry out the method (10) according to one of Claims 1 to 8.

12. Device (20) according to Claim 11 in the form of a microcontroller.

## Revendications

1. Procédé (10) permettant de mettre à jour un programme destiné à un appareil de commande dans un véhicule à moteur dans une mémoire flash EEPROM comprenant de multiples blocs dotés de cellules à niveaux multiples, comprenant les caractéristiques suivantes :
- une première représentation du programme est exécutée (11) tandis qu'un espace d'adressage (18) du programme est représenté sur les blocs et que les blocs sont utilisés dans un mode à un seul niveau,
- à la demande d'une deuxième représentation, une partie de la première représentation est copiée (12) dans un bloc de sécurité (19) de la mémoire à partir d'un domaine d'adresses dans l'espace d'adresses (18) qui est représenté sur un bloc particulier parmi les blocs,
- le bloc est amené à passer dans un mode à niveaux multiples et est programmé (13), en plus de la partie de la première représentation, avec une partie de la deuxième représentation (17) du programme correspondant à la taille du bloc tandis que le domaine d'adresses est provisoirement représenté sur le bloc de sécurité (19) de manière à ne pas affecter la fonctionnalité de la première représentation,
- le domaine d'adresses est à nouveau commuté sur le bloc (14) tandis que le bloc reste dans le mode à niveaux multiples,
- tant que la deuxième représentation (17) est incomplète (15, N), la copie (12), la programmation (13) et la commutation (14) sont répétées avec d'autres parties des représentations, et
- dès que la deuxième représentation (17) est complète (15, Y), cette dernière peut être exécutée (16) en lieu et place de la première représentation.

2. Procédé (10) selon la revendication 1,
**caractérisé par** les caractéristiques suivantes :
- une fonctionnalité de la deuxième représentation (17) est vérifiée pendant l'exécution (16), et
- les blocs sont ramenés successivement dans le mode à un seul niveau, selon le procédé inverse (10), si la fonctionnalité est assurée.

3. Procédé (10) selon la revendication 1,
**caractérisé par** la caractéristique suivante :
- la mémoire est utilisée avec un temps d'accès plus important afin de permettre l'évaluation des informations des cellules à niveaux multiples.

4. Procédé (10) selon la revendication 1,
**caractérisé par** les caractéristiques suivantes :
- l'appareil de commande peut être utilisé dans un mode SLC normal dans lequel le temps d'accès est plus court et par conséquent les performances sont supérieures et
- l'appareil de commande peut être utilisé dans un mode MLC normal dans lequel le temps d'accès est plus long et par conséquent les performances sont inférieures.

5. Procédé (10) selon l'une des revendications 1 à 4, **caractérisé par** la caractéristique suivante :
- le programme est adapté pour commander un appareil de terrain dans le véhicule à moteur, notamment un moteur à combustion interne.

6. Procédé (10) selon la revendication 5,
**caractérisé par** la caractéristique suivante :
- la deuxième représentation (17) est transmise au véhicule à moteur par l'intermédiaire d'une interface radio avant la programmation.

7. Procédé (10) selon l'une des revendications 1 à 6, **caractérisé par** la caractéristique suivante :
- la mémoire est non volatile.

8. Procédé (10) selon la revendication 7,
**caractérisé par** la caractéristique suivante :
- la mémoire est une mémoire flash NAND ou NOR.

9. Programme informatique, lequel est conçu pour mettre en œuvre le procédé (10) selon l'une des revendications 1 à 8.

10. Support de stockage lisible par machine sur lequel est stocké le programme informatique selon la revendication 9.

11. Dispositif (20), lequel est conçu pour mettre en œuvre le procédé (10) selon l'une des revendications 1 à 8.

12. Dispositif (20) selon la revendication 11 sous la forme d'un microcontrôleur.
